# EUROPÄISCHE PATENTSCHRIFT

(11) **EP 1 585 869 B1**
(45) Veröffentlichungstag und Bekanntmachung des Hinweises auf die Patenterteilung: **16.03.2011**
(21) Anmeldenummer: 04703363.4
(22) Anmeldetag: 20.01.2004
(51) Int. Cl.: E03F 5/14

(54) **VORRICHTUNG ZUM ENTFERNEN VON SIEBGUT AUS IN EINEM GERINNE STRÖMENDER FLÜSSIGKEIT**
DEVICE FOR REMOVING MATERIAL TO BE SCREENED FROM LIQUID FLOWING IN A CHANNEL
DISPOSITIF POUR SEPARER UNE MATIERE DE FILTRATION D'UN LIQUIDE S'ECOULANT DANS UN CANAL

(30) Priorität: 23.01.2003 DE 10302494
(43) Veröffentlichungstag der Anmeldung: 19.10.2005
(73) Patentinhaber: Huber SE, 92334 Berching (DE)
(72) Erfinder: FROMMANN, Christian, 92318 Neumarkt (DE)
(74) Vertreter: Bergmeier, Werner
(86) Internationale Anmeldenummer: PCT/EP2004/000387
(87) Internationale Veröffentlichungsnummer: WO 2004/065706

(56) Entgegenhaltungen:
- DE-A- 4 213 847
- US-A- 4 224 166
- US-A- 5 110 461

## Beschreibung

Die Erfindung betrifft eine Vorrichtung zum Entfernen von Siebgut aus in einem Gerinne strömender Flüssigkeit, mit einem schräggestellten, teilweise in die Flüssigkeit eintauchenden, umlaufend angetriebenen zylindermantelförmigen Siebrost, der anströmseitig eine offene Stirnseite und auf seiner Innenseite Leitbleche aufweist, mit einer koaxial zum Siebrost angeordneten, zu einer Abwurfstelle außerhalb der Flüssigkeit führenden Schneckenfördereinrichtung mit Gehäuse und einer angetriebenen Förderschnecke, wobei die Schneckenfördereinrichtung im Bereich des Siebrostes einen Einwurftrichter für das Siebgut aufweist, und mit einer über dem Einwurftrichter auf der Außenseite des Siebrostes ortsfest angeordneten Ablöseeinrichtung für das innen an einer Abscheidefläche des Siebrostes haftende Siebgut. Solche Vorrichtungen mit einem umlaufend angetriebenen Siebrost besitzen auf ihrem Zylindermantel Löcher oder Schlitze, die in der Größenordnung von etwa 4 bis 12 mm bemessen sind. Damit kann insbesondere Rechengut aus in einem Gerinne strömender Flüssigkeit entnommen werden. Feine Bestandteile, wie Schlämme o. dgl. können damit nicht behandelt werden. Auch Faserstoffe verbleiben im Gerinne, führen aber oft zu Veropfungen, bis hin zu Betriebsunterbrechungen.

### STAND DER TECHNIK

Eine Vorrichtung der eingangs beschriebenen Art ist aus der DE 34 20 157 C1 bekannt. Diese Vorrichtung weist einen mit seiner Achse schräg in das Gerinne eingestellten zylindermantelförmigen Siebrost auf, der anströmseitig hydraulisch offen und abströmseitig im wesentlichen hydraulisch geschlossen ausgebildet ist. Der Siebrost ist mit einer Schlitzlochung versehen, die auf der Innenseite eine Abscheidefläche bildet, während die Flüssigkeit durch die Schlitze hindurchtritt und im Gerinne verbleibt. Der zylindermantelförmige Siebrost wird in Verbindung mit einer Schneckenfördereinrichtung umlaufend angetrieben. Die Schneckenfördereinrichtung beginnt an einem Einwurftrichter, der koaxial im Bereich des Siebrostes ortsfest angeordnet und gelagert ist. Die Schneckenfördereinrichtung weist ein Gehäuse und eine Förderschnecke auf. Oberhalb des Einwurftrichters ist auf der Außenseite des Siebrostes eine ortsfest angeordnete Ablöseeinrichtung in Form einer Bürstenwalze oder einer Spritzwasserleiste vorgesehen, um von außen das an der Innenseite des Siebrostes befindliche Rechen- und/oder Siebgut abzulösen. Das Rechengut fällt in einen Einwurftrichter, an dem die Schneckenfördereinrichtung beginnt, und wird von dieser zu einer Abwurfstelle außerhalb der Flüssigkeit hochgefördert. Der zylindermantelförmige Siebrost weist auf seiner Innenseite spiralig angeordnete Leitbleche auf, die die Aufgabe haben, insbesondere größere Rechengutstücke beim Umlauf des Siebrostes mit nach oben zu fördern und an einem Zurückfallen während der Rotation des Siebrostes zu hindern. Die Durchbrechungen der Schlitzlochung im Siebrost können in einem gewissen Größenbereich von mehreren Millimetern bis hin zu etwa 10 mm gestaltet werden. Kleinere Durchbrechungen sind wirtschaftlich nicht herstellbar, so dass die bekannte Vorrichtung zur Behandlung von schlammartigem Siebgut nicht eingesetzt werden kann.

Aus der DE 36 30 755 C2 ist eine Vorrichtung zum Entfernen von Rechen- und/oder Siebgut aus in einem Gerinne strömender Flüssigkeit bekannt, die ebenfalls einen angetriebenen zylindermantelförmigen Siebrost aufweist und schräg in ein Gerinne eingestellt ist. Eine Schneckenfördereinrichtung führt von einem im Bereich des Siebrostes angeordneten Einwurftrichter bis zu einer Abwurfstelle außerhalb des Gerinnes. Der Siebrost besteht aus einer Vielzahl von Ringscheiben, die über den Umfang durchgehend mit Abstand zueinander schlitzbildend angeordnet sind. Als Ablöseeinrichtung ist ein Räumabstreifer vorgesehen, der innerhalb des Siebrostes oberhalb des Einwurftrichters angeordnet ist. Der Einwurftrichter weist eine Trichterwand auf, die bis zu dem Räumabstreifer hochgezogen ist. Der Räumabstreifer kann auch auf der Außenseite des Siebrostes angeordnet sein und von außen durch die Schlitze zwischen den Ringscheiben des Siebrostes hindurchgreifen. Infolge der Ausbildungen der Durchbrechungen des Siebrostes in Form einer Vielzahl von Ringscheiben sind auch hier konstruktive Grenzen gesetzt, so dass diese Vorrichtung eher zum Entfernen von Rechengut als zur Entfernung von Siebgut geeignet ist. Schlammartige Siebgüter können auch mit dieser Vorrichtung nicht behandelt werden.

Aus der DE 42 13 847 A1 ist eine Vorrichtung gemäß dem Oberbegriff des Anspruchs 1 bekannt.

### AUFGABE DER ERFINDUNG

Der Erfindung liegt die Aufgabe zugrunde, eine Vorrichtung der eingangs beschriebenen Art so weiterzubilden, dass sie zum Abscheiden von schlammartigem Siebgut in besonderer Weise geeignet ist, welches aus einer in einem Gerinne strömenden Flüssigkeit entnommen werden soll. Es geht dabei auch um die Abscheidung von Faserstoffen und anderem kleinformatigem Siebgut.

### LÖSUNG

Die Aufgabe der Erfindung wird erfindungsgemäß mit den Merkmalen des Patentanspruchs 1 gelöst.

### BESCHREIBUNG DER ERFINDUNG

Die Erfindung löst sich zunächst vom Stand der Technik, bei dem der Siebrost aus einem zylindermantelförmig gebogenen Blech mit Durchbrechungen in Form von Schlitzen oder Lochungen oder aber durch auf Abstand nebeneinander angeordnete Ringe gebildet wird. Der Siebrost wird aus zwei Elementen aufgebaut, nämlich einem Maschengewebe, welches auf seiner Innenseite die Abscheidefläche für das schlammartige Siebgut bildet. Ein solches Maschengewebe stellt nicht nur eine besonders kostengünstige Möglichkeit dar, die Durchbrechungen in der Abscheidefläche in einer anderen Größenordnung zu verwirklichen, als dies mit Schlitzen bei Ringscheiben und mit Bohrungen o. dgl. bei Lochblechen möglich ist. Jede Masche eines Maschengewebes besitzt einen definierten Durchgangsquerschnitt. Ein solches Maschengewebe lässt die Dimensionierung der Durchbrechungen in solche Bereiche zu, wie sie beim Abscheiden von schlammartigem Siebgut erforderlich sind. Die Durchbrechungen können sehr fein und gleichmäßig gestaltet werden. Beispielsweise sind dabei Größenordnungen von Bruchteilen von Millimetern realistisch. Ein solches Maschengewebe besitzt andererseits eine gewisse Instabilität in Bezug auf die Beibehaltung eines konstanten Durchmessers des Siebrostes. Das Maschengewebe wird durch ein gestaltgebendes Tragelement unterstützt bzw. auf diesem aufgelagert, so dass damit die Zylinderform des Siebrostes dauerhaft erreicht wird. Es versteht sich, dass das gestaltgebende Tragelement vergleichsweise größere Durchbrechungen für den Durchtritt der Flüssigkeit aufweist. Diese Durchbrechungen haben keine Bedeutung mit Hinblick auf die Abscheidefläche des Maschengewebes.

Außerhalb des Umfangs des Siebrostes und auch außerhalb des Flüssigkeitsspiegels im Gerinne ist eine Ablöseeinrichtung ortsfest vorgesehen, die eine Spritzwasserleiste aufweisen sollte, um das innen an der Abscheidefläche des Siebrostes haftende und beim umlaufenden Antrieb mitgenommene Siebgut abzulösen und in den Einwurftrichter zu überführen. Damit gelangt auch Spritzwasser in den Einwurftrichter. Ebenso wird mit der Hochförderung des Siebgutes Flüssigkeit aus dem Gerinne mitgenommen, die ebenfalls in den Einwurftrichter gelangt. Das mit dem Maschengewebe auf der so gebildeten Abscheidefläche abgeschiedene Siebgut agglomeriert durch den Einsatz der Spritzleiste als Ablöseeinrichtung und gelangt so in den Einwurftrichter. Um eine Vorentwässerung im Bereich des Einwurftrichters zu erzielen, muss der Einwurftrichter im Bereich seines Bodens mit Durchbrechungen versehen sein, durch die ansonsten auch von der Schneckenfördereinrichtung beispielsweise im Bereich einer Presszone abgeschiedene Flüssigkeit in das Gerinne rückgeführt wird.

Die Abscheidefläche wird durch Leitbleche ergänzt. Diese sind zur Bildung von Fördertrögen für das Gemisch aus Flüssigkeit und Siebgut ausgebildet und dienen dazu, das Gemisch hochzufördem. Die Leitbleche sind über ihre axiale Länge durch Trennwände in einzelne Fördertröge unterteilt. Auch endseitig kann eine Abschlusswand vorgesehen sein. Damit werden einzelne Portionen des Gemischs aus Flüssigkeit und Siebgut nach oben transportiert. Dabei fließt aus den einzelnen Trögen Flüssigkeit ab, sodass während des Hochförderns eine Konzentration des Siebgutes stattfindet. In einer besonders einfach herzustellenden Ausführungsform sind die ansonsten zur Abscheidefläche abgedichtet angeordneten Leitbleche nicht mehr spiralförmig, sondern achsparallel gegen den inneren Umfang der Abscheidefläche angestellt, so dass sie die schaufelartigen Tröge bilden, mit deren Hilfe das abgeschiedene Siebgut beim Umlauf des Siebrostes nach oben gefördert wird. Durch die Schrägstellung der Achse der Vorrichtung im Gerinne tauchen die einzelnen Tröge eines Leitblechs nacheinander aus dem Flüssigkeitsspiegel im Gerinne auf. Unterhalb und oberhalb des Spiegels der Flüssigkeit im Gerinne tritt die Flüssigkeit durch das Maschengewebe hindurch, so dass sich in den durch die Leitbleche ausgebildeten Trögen das Siebgut anreichert. Durch die Verlagerung des Spiegels des Gemisches aus Flüssigkeit und Abscheidegut in den Trögen und durch die funktionsmäßige Verringerung des zur Verfügung gestellten Volumens der Tröge findet eine zusätzliche Konzentration des Abscheidegutes während des Nachobenförderns statt. Diese Konzentration des Abscheidegutes ist auch erforderlich, um solche Schlämme zu behandeln. Es ist aber auch möglich, die Leitbleche nicht achsparallel, sondern parallel zum Wasserspiegel im Gerinne gegen die Abscheidefläche anzustellen und anzuordnen. Dann können die Trennwände entfallen. Allerdings sind die Endwände nach wie vor erforderlich und der Einstellwinkel der Vorrichtung im Gerinne liegt fest. Wenn der Einstellwinkel im Gerinne variabel sein soll, müssen auch die Trennwände beibehalten werden und auf diese Weise einzelne Kammern oder Tröge gebildet werden.

Die Förderschnecke der Schneckenfördereinrichtung kann im Bereich des Siebrostes mit an dem durchbrochenen Einwurftrichter entlangstreichenden Bürsten versehen sein. Diese Bürsten sind am äußeren Umfang der Förderschnecke auf diese aufgesetzt und haben die Aufgabe, beim Betrieb der Vorrichtung die durch die bodenseitigen Durchbrechungen im Einwurftrichter gebildete Fläche immer wieder zu reinigen, damit eine gleichmäßige Vorentwässerung des abgeschiedenen Siebgutes stattfinden kann. Die Vorrichtung kann auch diskontinuierlich betrieben werden, um in Stillstandszeiten eine gewisse Belegung der Abscheidefläche des Maschengewebes bewusst zuzulassen. Damit wird eine gewisse Aufstauwirkung der Flüssigkeit im Gerinne hervorgerufen, in deren Folge eine entsprechend große Abscheidefläche des Siebrostes genutzt wird, obwohl dieser mit seiner Achse schräg in das Gerinne eingestellt ist. Auch der durchbrochene Boden des Einwurftrichters befindet sich bereichsweise unterhalb des Flüssigkeitsspiegels im Gerinne. Auch die Belegung dieses durchbrochenen Bodens wird bewusst zu Abscheidezwecken genutzt. In Zeiten, in denen der Siebrost angetrieben wird, findet dann wiederum eine Reinigung des durchbrochenen Bodens des Einwurftrichters statt, verbunden mit einem Abbau der Aufstauwirkung der Flüssigkeit im Gerinne.

Die Leitbleche können in Zuordnung zu der Abscheidefläche an ihrer dem Maschengewebe abgekehrten Seite durchbrochen ausgebildet sein. Diese Durchbrechung kann kammartig gestaltet sein oder aber auch aus Bohrungen, Schlitzen o. dgl. bestehen, durch die insbesondere Flüssigkeit hindurchtritt oder überfällt, wenn die Leitbleche beim umlaufenden Antrieb des Siebrostes nach oben geführt werden, bevor die Ablöseeinrichtung erreicht wird. Auch durch diese Ausbildung wird eine Aufkonzentration des abgeschiedenen schlammartigen Siebgutes erreicht.

Das gestaltgebende Tragelement kann in verschiedener Weise realisiert werden. Es kann hier insbesondere ein Stützgewebe vorgesehen sein, welches vergleichsweise wesentlich grobmaschiger ausgebildet und seinerseits nach der Verformung in einen Zylindermantel die Gestalt beibehält bzw. dem Maschengewebe diese Gestalt dauerhaft aufprägt. Das Maschengewebe kann mit dem Stützgewebe bereichsweise oder punktweise fest verbunden sein. Es ist aber auch möglich, als gestaltgebendes Tragelement einen Armkorb einzusetzen, also einen zylinderförmigen Körper aus Armen und Streben, der zur Aufnahme des Maschengewebes entlang seines inneren zylindermantelförmigen Umrisses ausgebildet ist.

Die Ablöseeinrichtung sollte Düsen für Spritzwasser und/oder Druckluft aufweisen. Es können eine oder mehrere Düsenleisten parallel zur Mantellinie des zylindermantelförmigen Siebrostes angeordnet sein. Diese Düsen für Spritzwasser und/oder Druckluft ermöglichen es, das gestaltgebende Tragelement zu durchdringen und das innen am Maschengewebe abgelagerte Siebgut zu lösen und in den Einwurftrichter zu überführen.

Der Einwurftrichter kann in axialer Richtung länger oder versetzt zu der axialen Erstreckung des Siebrostes vorgesehen sein, wie es der Schrägstellung der Achse der Vorrichtung entspricht. Damit erstreckt sich der Einwurftrichter durch einen gewissen Bereich durch die offene Stirnseite des Siebrostes hindurch. Es ist aber auch möglich, den Einwurftrichter im Bereich der offenen Stirnseite des Siebrostes mit einer hochgezogenen Trichterwand auszustatten, so dass der axiale Versatz in Wegfall kommen kann. Auch die Seitenwände des Einwurftrichters können hochgezogen ausgebildet sein und sich daher fast bis zum inneren Umfang des Siebrostes bzw. des Maschengewebes erstrecken, da die Ablöseeinrichtung außerhalb des Siebrostes vorgesehen ist.

Als Maschengewebe wird insbesondere ein Quadratmaschengewebe mit einer Maschenweite im Bereich zwischen 0,2 und 1,2 mm eingesetzt. Derartige Quadratmaschengewebe sind auf Webstühlen preisgünstig herstellbar. Die Maschenweite ist in engen Bereichen konstant und erlaubt damit eine individuelle Anpassung an die Größe der Partikel des schlammartigen Siebgutes. Damit kann Siebgut in Form von Faserstoffen, Haaren u. dgl. ohne weiteres reproduzierbar abgeschieden werden.

Der bodenseitig durchbrochene Einwurftrichter kann Bohrungen mit einem Durchmesser von etwa 2 mm aufweisen. Überraschenderweise sind Bohrungen in dieser Größenordnung nicht hinderlich, um mit der Vorrichtung schlammartiges Siebgut abzuscheiden. Das mit dem feinen Maschengewebe zurückgehaltene Abscheidegut agglomeriert beim Ablösen durch die Ablöseeinrichtung und gelangt so in den Einwurftrichter. Um hier eine entsprechende verbesserte Vorentwässerung im Bereich des Einwurftrichters zu erzielen, sind Bohrungen in der angegebenen Größenordnung besonders wirksam.

Die Anzahl der trogbildenden Leitbleche über die Abscheidefläche ist an sich beliebig wählbar, so dass auch hier eine Anpassung an die Konsistenz des schlammartigen Siebgutes individuell möglich ist. In vielen Fällen reicht die Anordnung von drei Leitblechen über die Abscheidefläche aus. Die Leitbleche sind unter gleichem gegenseitigem Abstand verteilt angeordnet.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine schematische Seitenansicht der gesamten Vorrichtung im Einbau- zustand.
- **Fig. 2**: zeigt eine vergrößerte Darstellung der Einzelheiten der Vorrichtung im Bereich des angetriebenen Siebrostes.
- **Fig. 3**: zeigt einen Schnitt gemäß der Linie III-III in Fig. 2.
- **Fig. 4**: zeigt eine vergrößerte Schnittdarstellung sowie eine Draufsicht auf den Siebrost aus einem Maschengewebe und einem Stützgewebe.
- **Fig. 5**: zeigt eine ähnliche Darstellung wie Fig. 3, jedoch mit einem Armkorb als gestaltgebendes Tragelement.
- **Fig. 6**: zeigt eine Draufsicht auf den Siebrost gemäß Fig. 5.
- **Fig. 7**: zeigt eine weitere Ausführungsform der Vorrichtung.

### FIGURENBESCHREIBUNG

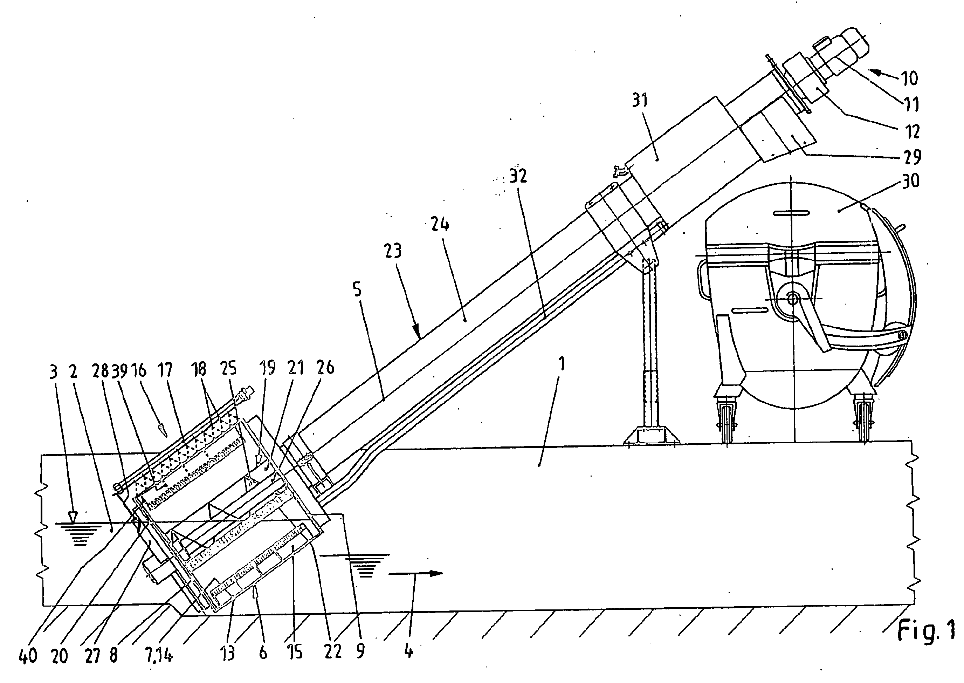

**Fig. 1** zeigt einen Teil eines Gerinnes 1, in welchem eine mit Siebgut verschmutzte Flüssigkeit 2 bis zu einem Wasserstand 3 in Richtung eines Pfeils 4 strömt. Die Vorrichtung ist mit ihrer Achse 5 schrägstehend im Gerinne 1 eingebaut, wobei der Einbauwinkel vorzugsweise etwa 35° betragen kann. Die Vorrichtung weist einen zylindermantelförmigen Siebrost 6 auf, dessen wesentlicher Bestandteil ein Maschengewebe 7 ist. Der Siebrost 6 weist anströmseitig eine offene Stirnfläche 8 auf, durch die die verschmutzte Flüssigkeit in den Innenraum des Siebrostes 6 einströmt. Abströmseitig ist eine entsprechend abgedichtete und damit hydraulisch geschlossene Stirnfläche 9 vorgesehen. Im Bereich der Stirnfläche 9 ist der Siebrost 6 drehbar aufgelagert und gegenüber stillstehenden Teilen abgedichtet. Der Siebrost 6 wird umlaufend um seine Achse 5 angetrieben. Der Antrieb geschieht insbesondere diskontinuierlich, so dass Stillstandszeiten mit Umlaufzeiten abwechseln. Als Antrieb 10 dient ein Motor 11 mit gegebenenfalls vorgesehenem Getriebe 12.

Der Siebrost 6 weist neben dem Maschengewebe 7 ein gestaltgebendes Tragelement 13 auf. Das Tragelement 13 nimmt auf seiner Innenseite das Maschengewebe 7 auf. Das Tragelement 13 hat die Aufgabe, die Gestalt des Siebrostes 6 dauerhaft zylindermantelförmig festzulegen und die entsprechenden Kräfte aufzunehmen. Das Maschengewebe 7 bildet auf seiner inneren Oberfläche des Zylindermantels eine Abscheidefläche 14. Die Abscheidefläche 14 wird durch Leitbleche 15 ergänzt, die parallel zur Achse 5 der Vorrichtung bzw. zu einer Mantellinie des zylindermantelförmigen Siebrostes 6 angeordnet sein können. Die Leitbleche 15 schließen abgedichtet an die Abscheidefläche 14 an und sind durch Trennwände 39 unterteilt und zumindest am einen Ende durch eine Abschlusswand 40 abgeschlossen. Die so gebildeten Fördertröge laufen mit dem Siebrost 6 um und bilden damit trogartige Kammern, die sich von unterhalb des Wasserstands 3 beim Umlauf bis aus dem Wasserstand 3 nach oben heraus bewegen und der Hochförderung des Abscheidegutes dienen.

Oberhalb des Wasserstands 3 und oberhalb des Siebrostes 6 ist eine Ablöseeinrichtung 16 vorgesehen, die eine Spritzleiste 17 mit Düsen 18 aufweist. Mit Hilfe der Ablöseeinrichtung 16 wird Spritzwasser von außen durch Durchbrechungen des Tragelements 13 und durch die Durchbrechungen in dem Maschengewebe 7 gespritzt, so dass am inneren Umfang des Maschengewebes 7 abgeschiedenes Abscheidegut losgelöst wird und infolge Schwerkrafteinfluss bzw. auch durch die Kräfte des gespritzten Wassers in einen Einwurftrichter 19 gelangt, der parallel zur Achse 5 der Vorrichtung vorzugsweise konzentrisch im Bereich des Siebrostes 6 ortsfest gelagert ist. Die Ablöseeinrichtung 16 kann mit Spritzwasser und/oder Druckluft arbeitend ausgebildet sein. Der Einwurftrichter 19 weist in Zuordnung zu der offenen Stirnwand 8 des Siebrostes 6 eine hochgezogene Trichterwand 20 sowie Seitenwände 21 auf. Der Bodenbereich des Einwurftrichters 19 ist mit Durchbrechungen 22 versehen, die in Form von Bohrungen mit einem Durchmesser bis zu 2 mm ausgebildet sein können.

Koaxial zur Achse 5 der gesamten Vorrichtung und damit auch des Siebrostes 6 ist eine Schneckenfördereinrichtung 23 vorgesehen, die als wesentliche Bestandteile ein Gehäuse 24 und eine darin untergebrachte Förderschnecke 25 aufweist. Eine durchgehende Welle 26, die die Förderschnecke 25 trägt, erstreckt sich vom Motor 11 bzw. vom Getriebe 12 durch das gesamte Gehäuse 24 hindurch und steht im Bereich des Siebrostes 6 gegenüber dem Gehäuse 24 axial über. In diesem Bereich arbeitet die Förderschnecke 25 mit dem Einwurftrichter 18 zusammen. Hier kann die Förderschnecke 25 auch mit aus Übersichtlichkeitsgründen nicht dargestellten Bürstenelementen versehen sein, die an der durchbrochenen Bodenwandung des Einwurftrichters 19 entlangstreichen und damit die Durchbrechungen 22 immer wieder säubern und freilegen.

Der Motor 11 treibt über die Welle 26 die Förderschnecke 25 der Schneckenfördereinrichtung 23 an. Der Motor 11 dient zugleich dem umlaufenden Antrieb des Siebrostes 6. Zu diesem Zweck kann ein Antriebsarm 27 vorgesehen sein, der drehfest mit der Welle 26 wie auch mit dem Siebrost 6, insbesondere dessen Tragelement 13 verbunden ist. Durch ein Auskleideblech 28 wird der Zwischenraum zwischen dem Siebrost 6 und den Wänden des Gerinnes 1 abgedichtet, so dass die verschmutzte Flüssigkeit gezwungen ist, durch die offene Stirnfläche 8 in den Innenraum des zylindermantelförmigen Siebrostes 6 einzuströmen. Dabei strömt die Flüssigkeit durch Durchbrechungen in dem Maschengewebe 7 und verbleibt somit im Gerinne, während sich das Abscheidegut auf der inneren Oberfläche des Maschengewebes 7 abscheidet und beim umlaufenden Antrieb des Siebrostes 6 mit nach oben gefördert wird. Nach dem Abwurf des Abscheidegutes durch die Ablöseeinrichtung 16 gelangt dieses in den Bereich des Einwurftrichters 19 und damit auch in den Wirkbereich der Schneckenfördereinrichtung 26. Es wird nach oben gefördert und gelangt über eine Abwurfstelle 29 beispielsweise in einen Container 30. Im oberen Bereich der Schneckenfördereinrichtung 23 kann eine Presszone 31 untergebracht sein, in der das hochgeförderte Abscheidegut weiter entwässert wird, bevor es zu der Abwurfstelle 29 gelangt. Eine Leitung 32 dient der Rückführung von in der Presszone 31 abgeschiedener Flüssigkeit in das Gerinne 1.

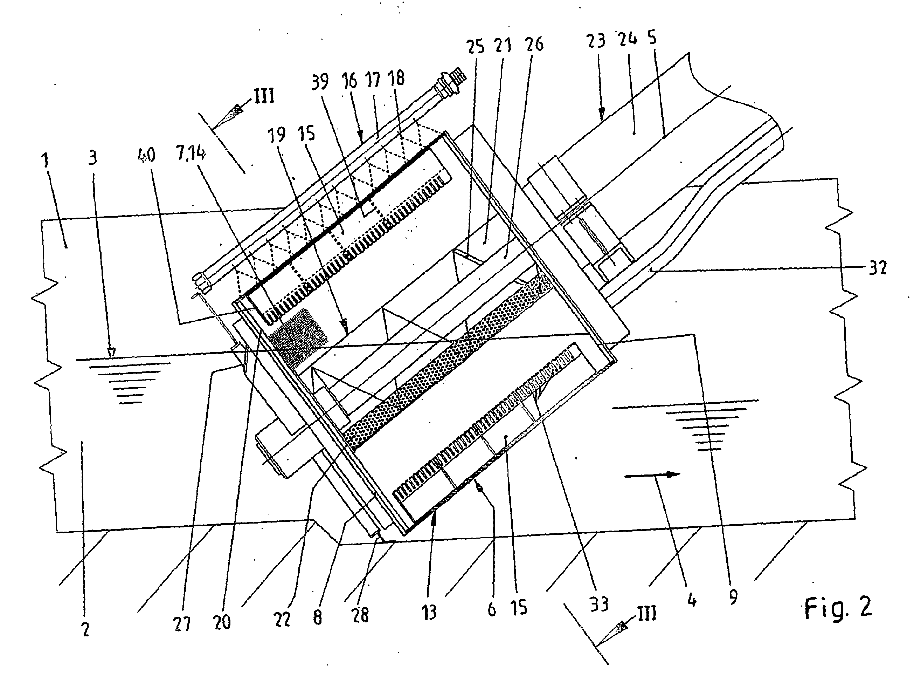

**Fig. 2** verdeutlicht noch einmal in vergrößerter Darstellung die Ausbildung im Bereich des Siebrostes 6. Es ist ausschnittsweise der innere Umfang des Siebrostes 6 verdeutlicht, der mit dem Maschengewebe 7 belegt ist, welches die Abscheidefläche 14 bildet. Es ist auch erkennbar, dass sich die Leitbleche 15 achsparallel erstrecken und in dieser Weise gegen die Abscheidefläche 14 des Maschengewebes 7 angestellt sind. Die Leitbleche 15 weisen an ihrem freien, der Abscheidefläche 14 abgekehrten Seite Durchbrechungen 33 auf, die hier kammartig ausgebildet sind. Diese Durchbrechungen 33 können auch in Form von Bohrungen in diesem Bereich der Leitbleche 15 realisiert werden. Damit findet während der Hochförderung des Siebgutes in den trogartigen Kammern eine dauernde Entwässerung des Siebgutes statt, indem sich die Flüssigkeitsspiegel in den Kammern verändern und dabei Flüssigkeit durch die kammartigen Durchbrechungen 33 oder die Bohrungen übertritt und in das Gerinne zurückgelangt.

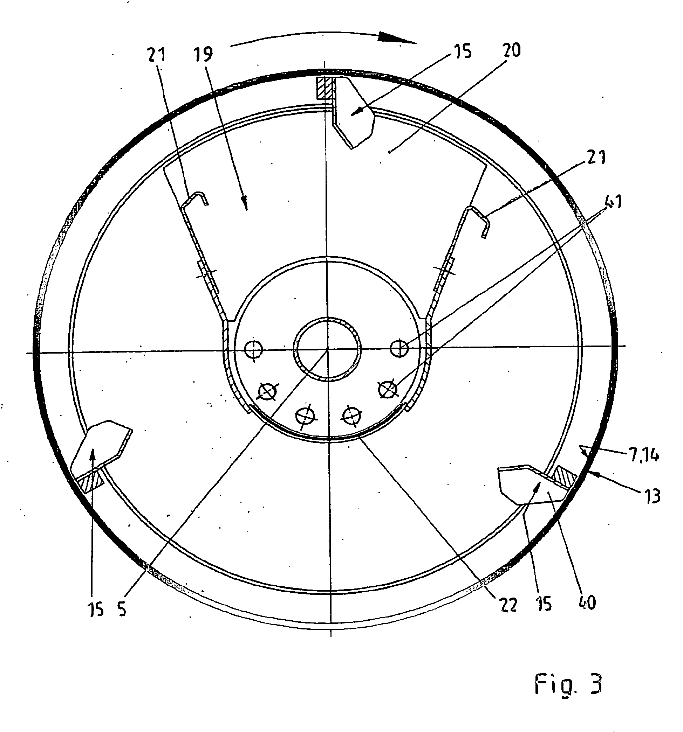

**Fig. 3** verdeutlicht noch einmal eine Schnittansicht gemäß der Linie III-III in Fig. 2. Der Einwurftrichter 19 ist besonders gut erkennbar. Der Einwurftrichter weist die Trichterwand 21 auf, die in ihrem unteren Bereich Öffnungen 41 besitzen kann, die zusätzlich zu den Durchbrechungen 22 im Boden des Einwurftrichters 19 vorgesehen sind. Die Öffnungen 41 können sinnvoll einen größeren Durchmesser als die im Bodenbereich angeordneten Durchbrechungen 22 aufweisen. Weiter ist die Anordnung von drei Leitblechen 15 erkennbar, die als gerade Stücke hergestellt und parallel zur Achse 5 der Vorrichtung angeordnet sind.

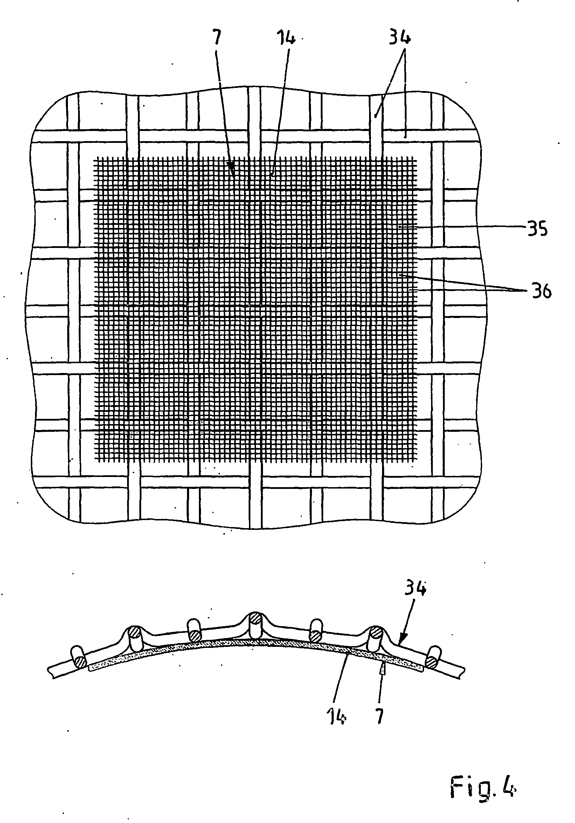

**Fig. 4** verdeutlicht einerseits eine vergrößerte Darstellung des Maschengewebes 7 und des Tragelementes 13, welches hier als Stützgewebe 34 ausgebildet ist. Das Stützgewebe 34 ist gestaltgebend und damit relativ starr ausgebildet, so dass es zylindermantelförmig gebogen, seine Form beibehält und die Festigkeit des Siebrostes 6 bereitstellt. Das Maschengewebe 37 ist hier als Quadratmaschengewebe 35 ausgebildet und besitzt eine Maschenweite 36, die je nach Anwendungsfall im Bereich zwischen 0,2 und 1,2 mm gewählt werden kann. Die Innenseite des Quadratmaschengewebes 35 bildet die Abscheidefläche 14.

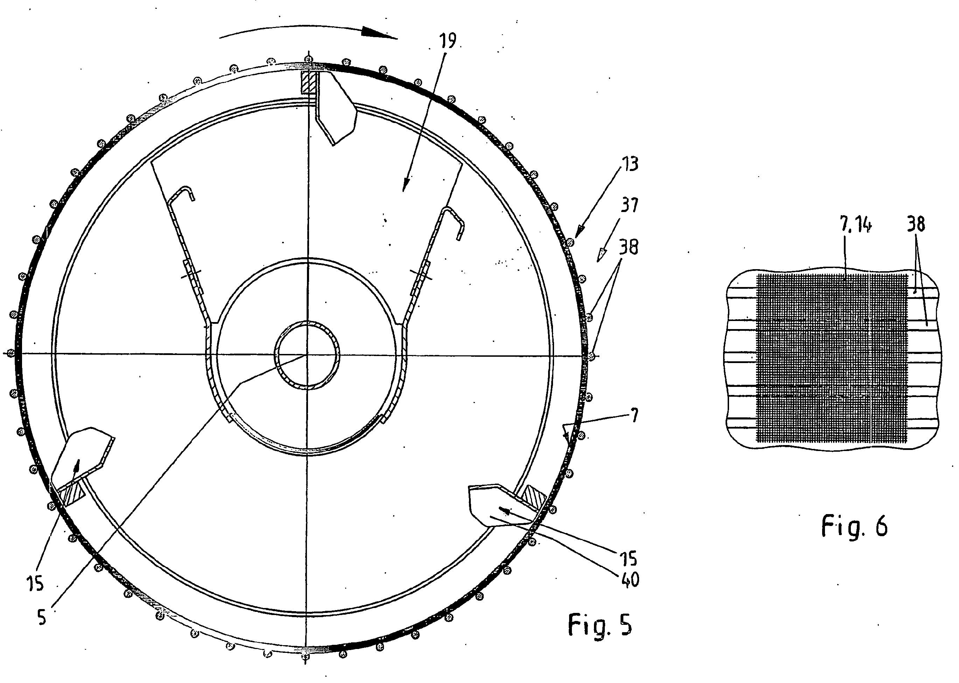

Die **Fig. 5** und 6 zeigen eine weitere Ausführungsmöglichkeit des Siebrostes 6. Dessen gestaltgebendes Tragelement 13 besteht hier aus einem Armkorb 37, dessen achsparallel verlaufende Streben 38 besonders hervorgehoben sind. Es versteht sich, dass diese Streben 38 über nicht dargestellte kreisförmig verlaufende Tragelemente gehalten sind. Auch hier ist wiederum der innere Umfang des Armkorbes 37 bzw. Tragelements 13 mit dem Maschengewebe 7 belegt. Auch hier kann der Bodenbereich des Einwurftrichters 19 in Form eines Lochbleches mit den Durchbrechungen 22 versehen sein. Zusätzlich können in der Trichterwand 20 auch die in Fig. 3 dargestellten Öffnungen 41 angeordnet sein.

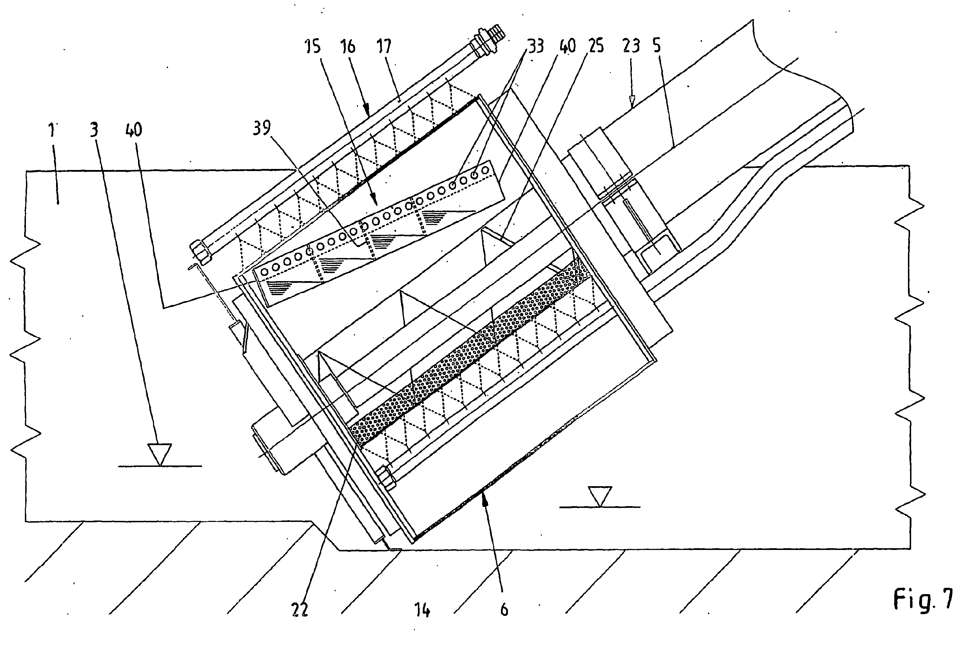

**Fig. 7** zeigt eine weitere Ausführungsform der Vorrichtung, die in weiten Bereichen mit der Ausführungsform der Fig. 2 übereinstimmt. Die Leitbleche 15 bestehen hier jedoch aus gebogen hergestellten Elementen, die in Schräglage zur Horizontalen und nicht achsparallel an dem inneren Umfang des Siebrostes 6 abgedichtet angeordnet sind. Statt der kammartigen Ausbildung der Ränder der Leitbleche 15 können Bohrungen 42 randnah angeordnet sein. Es versteht sich, dass mehrere Leitbleche 15 über den Umfang gleichmäßig verteilt vorgesehen sind, obwohl nur ein Leitblech 15 (aus Übersichtlichkeitsgründen) dargestellt ist. Es ist erkennbar, wie sich die Flüssigkeitsspiegel in den einzelnen trogartigen Kammern beim Umlauf des Siebrostes 6 einstellen und ihre Stellung fortlaufend verändern. Dabei findet eine Entwässerung statt und es gelangt fortlaufend bevorzugt Flüssigkeit in das Gerinne zurück.

**Fig. 7** zeigt auch eine oder mehrere zusätzliche Spritzleisten 43, die unterhalb des Lochbleches mit den Durchbrechungen 22 angeordnet sind. Auch diese Spritzleisten 43 besitzen Düsen 44 und können mit Spritzwasser und/oder Druckluft betrieben werden. Die Spritzleisten 43 können zusätzlich oder alternativ zu den Bürsten verwirklicht werden, die am Rand der Förderschnecke im Bereich des Einwurftrichters 19 innen vorgesehen sind. Die Spritzleisten 43 dienen bzw. unterstützen die Reinigung der Durchbrechungen 22 des Lochbleches des Einwurftrichters 19. Die Spritzleisten 43 können bevorzugt diskontinuierlich betrieben werden, wie auch die gesamte Vorrichtung, jedoch in solchen Zeitabschnitten, in denen der Wasserspiegel 3 im Gerinne 1 nach der Reinigung des Siebrostes 6 durch die Ablöseeinrichtung 16 auf ein unteres Niveau abgefallen ist, wie dargestellt.

### BEZUGSZEICHENLISTE

- 1: Gerinne
- 2: Flüssigkeit
- 3: Wasserstand
- 4: Pfeil
- 5: Achse
- 6: Siebrost
- 7: Maschengewebe
- 8: Stirnfläche
- 9: Stirnfläche
- 10: Antrieb

- 21: Seitenwand
- 22: Durchbrechung
- 23: Schneckenfördereinrichtung
- 24: Gehäuse
- 25: Förderschnecke
- 26: Welle
- 27: Antriebsarm
- 28: Auskleideblech
- 29: Abwurfstelle
- 30: Container

- 41: Öffnung
- 42: Bohrung
- 43: Spritzleiste
- 44: Düse

- 11: Motor
- 12: Getriebe
- 13: Tragelement
- 14: Abscheidefläche
- 15: Leitblech
- 16: Ablöseeinrichtung
- 17: Spritzleiste
- 18: Düse
- 19: Einwurftrichter
- 20: Trichterwand

- 31: Presszone
- 32: Leitung
- 33: Durchbrechung
- 34: Stützgewebe
- 35: Quadratmaschengewebe
- 36: Maschenweite
- 37: Armkorb
- 38: Strebe
- 39: Trennwand
- 40: Abschlusswand

## Patentansprüche

1. Vorrichtung zum Entfernen von Siebgut aus in einem Gerinne (1) strömender Flüssigkeit (2), mit einem schräggestellten, teilweise in die Flüssigkeit eintauchenden, umlaufend angetriebenen zylindermantelförmigen Siebrost (6), der anströmseitig eine offene Stirnseite (8) und auf seiner Innenseite Leitbleche (15) aufweist, mit einer koaxial zum Siebrost (6) angeordneten, zu einer Abwurfstelle (29) außerhalb der Flüssigkeit führenden Schneckenfördereinrichtung (23) mit Gehäuse (24) und einer angetriebenen Förderschnecke (25), wobei die Schneckenfördereinrichtung (23) im Bereich des Siebrostes (6) einen Einwurftrichter (19) für das Siebgut aufweist, und mit einer über dem Einwurftrichter (19) auf der Außenseite des Siebrostes (6) ortsfest angeordneten Ablöseeinrichtung (16) für das innen an einer Abscheidefläche (14) des Siebrostes (6) haftende Siebgut, wobei der Einwurftrichter (19) bodenseitig durchbrochen ausgebildet ist, **dadurch gekennzeichnet, dass** der Siebrost (6) ein gestaltgebendes Tragelement (13) und ein die Abscheidefläche (14) bildendes Maschengewebe (7) aufweist und dass die Leitbleche (15) zur Bildung von Fördertrögen für das Gemisch aus Flüssigkeit und Siebgut gegen die Abscheidefläche (14) des Maschengewebes (7) angestellt sind.

2. Vorrichtung nach Anspruch 1, **dadurch gekennzeichnet, dass** die Förderschnecke (25) der Schneckenfördereinrichtung (23) im Bereich des Siebrostes (6) mit an dem durchbrochenen Einwurftrichter (19) entlangstreichenden Bürsten versehen ist.

3. Vorrichtung nach Anspruch 1 oder 2, **dadurch gekennzeichnet, dass** die Leitbleche (15) an ihrer dem Maschengewebe (7) abgekehrten Seite, insbesondere kammartig, durchbrochen ausgebildet sind.

4. Vorrichtung nach einem der Ansprüche 1 bis 3, **dadurch gekennzeichnet, dass** als gestaltgebendes Tragelement (13) ein Stützgewebe (34) vorgesehen ist.

5. Vorrichtung nach einem der Ansprüche 1 bis 3, **dadurch gekennzeichnet , dass** als gestaltgebendes Tragelement (13) ein Armkorb (37) vorgesehen ist.

6. Vorrichtung nach einem der Ansprüche 1 bis 5, **dadurch gekennzeichnet, dass** die Ablöseeinrichtung (16) Düsen (18) für Spritzwasser und/oder Druckluft aufweist.

7. Vorrichtung nach einem der Ansprüche 1 bis 6, **dadurch gekennzeichnet, dass** der Einwurftrichter (19) im Bereich der offenen Stirnseite (8) des Siebrostes (6) eine hochgezogene Trichterwand (20) aufweist.

8. Vorrichtung nach einem der Ansprüche 1 bis 7, **dadurch gekennzeichnet, dass** als Maschengewebe (7) ein Quadratmaschengewebe (35) mit einer Maschenweite (36) im Bereich zwischen 0,2 und 1,2 mm vorgesehen ist.

9. Vorrichtung nach einem der Ansprüche 1 bis 8, **dadurch gekennzeichnet, dass** der bodenseitig durchbrochene Einwurftrichter (19) Bohrungen mit einem Durchmesser von etwa 2 mm aufweist.

10. Vorrichtung nach einem der Ansprüche 1 bis 9, **dadurch gekennzeichnet, dass** drei Leitbleche (15) über die Abscheidefläche (14) verteilt vorgesehen sind.

## Claims

1. An apparatus for removing screenings from a liquid (2) flowing in a channel (1), with a cylindrically designed sieve grate (6) which is arranged at an inclined orientation and partially submerged in the liquid, said sieve grate (6) being rotatably driven and having an open face (8) at the inflow side and guide plates (15) on its inner side, with a screw conveyor (23) leading to a discharge point (29) outside of the liquid and being arranged coaxially to the sieve grate (6) with a housing (24) and a driven conveying screw (25), said screw conveyor (23) having a feeding hopper (19) in the region of said sieve grate (6) for the screenings, and with a detaching device (16) being arranged above said feeding hopper (19) and at the outer side of said sieve grate (6) in a stationary way to detach material which adheres to the inside of a separation surface (14) of said sieve grate (6), wherein the feeding hopper (19) is designed in a way that it has a plurality of openings at its bottom side, **characterised in that** the sieve grate (6) comprises a shaping carrier element (13) and a mesh fabric (7) that forms the separation surface (14) and that the guide plates (15) are arranged in inclined manner with respect to the separation surface (14) of the mesh fabric (7) to form conveyer troughs for the mixture of liquid and screenings.

2. Apparatus according to claim 1, **characterised in that** the conveying screw (25) of the screw conveyer (23) in the region of the sieve grate (6) is equipped with brushes that stroke along the pierced feeding hopper (19).

3. Apparatus according to claim 1 or 2, **characterised in that** the guide plates (15) include a plurality of openings at a side facing away from the mesh fabric (7), said openings being particularly designed similar to the openings of a comb.

4. Apparatus according to one of the claims 1 to 3, **characterised in that** a supporting fabric (34) is provided as a shaping carrier element (13).

5. Apparatus according to one of the claims 1 to 3, **characterised in that** a basket (37) having arms is provided as a shaping carrier element (13).

6. Apparatus according to one of the claims 1 to 5, **characterised in that** the detaching device (16) comprises nozzles (18) for spraying water and/or compressed air.

7. Apparatus according to one of the claims 1 to 6, **characterised in that** the feeding hopper (19) in the region of the open face (8) of the sieve grate (6) has a wall (20) that is extended in the upward direction.

8. Apparatus according to one of the claims 1 to 7, **characterised in that** a square mesh fabric (35) with mesh apertures (36) of between 0.2 and 1.2 mm is provided as said mesh fabric (7).

9. Apparatus according to one of the claims 1 to 8, **characterised in that** the feeding hopper (19) with said plurality of openings at its bottom side has openings with a diameter of approximately 2 mm.

10. Apparatus according to one of the claims 1 to 9, **characterised in that** three guide plates (15) are provided being arranged in a spaced apart manner with respect to the separation surface (14).

## Revendications

1. Dispositif pour éliminer des refus de tamisage depuis un liquide (2) coulant dans une rigole (1), avec une grille de tamis (6) en forme d'enveloppe de cylindre, inclinée, partiellement immergée dans le liquide et entraînée en rotation, comportant une face frontale ouverte (8) sur son côté amont et des tôles de guidage (15) sur sa face intérieure, un dispositif de convoyage à vis sans fin (23) avec carter (24) disposé de manière coaxiale par rapport à la grille de tamis (6) et conduisant à un point de déversement (29) situé hors du liquide et une vis sans fin de convoyage entraînée (25), sachant que le dispositif de convoyage à vis sans fin (23) comporte une trémie d'alimentation (19) pour les refus de tamisage dans la zone de la grille de tamisage (6), et avec un dispositif de détachement (16) disposé au-dessus de la trémie d'alimentation (19), agencé à demeure sur le côté extérieur de la grille de tamisage (6), pour les refus de tamisage adhérant à l'intérieur de la surface de séparation (14) de la grille de tamisage (6), sachant que la trémie d'alimentation (19) se présente sous une forme ajourée sur le côté du fond, **caractérisé en ce que** la grille de tamis (6) comporte un élément porteur de façonnage (13) et un tissu à mailles (7) constituant la surface de séparation (14) et que pour la formation d'auges de convoyage pour le mélange de liquide et de refus de tamisage, les tôles de guidage (15) sont mise en place contre la surface de séparation (14) du tissu à mailles (7).

2. Dispositif selon la revendication 1, **caractérisé en ce que** la vis sans fin de convoyage (25) du dispositif de convoyage à vis sans fin (23), dans la zone de la grille de tamis (6), est pourvue de brosses balayant le long de la trémie d'alimentation ajourée (19).

3. Dispositif selon la revendication 1 ou 2, **caractérisé en ce que** les tôles de guidage (15) se présentent sous une forme ajourée, en particulier avec une structure en peigne, sur leur côté qui n'est pas orienté vers le tissu à mailles (7).

4. Dispositif selon l'une des revendications 1 à 3, **caractérisé en ce qu'**un tissu support (34) est prévu comme élément porteur de façonnage (13).

5. Dispositif selon l'une des revendications 1 à 3, **caractérisé en ce qu'**une cage à bras (37) est prévue comme élément porteur de façonnage (13).

6. Dispositif selon l'une des revendications 1 à 5, **caractérisé en ce que** le dispositif de détachement (16) comporte des buses (18) pour l'eau aspergée et/ou l'air comprimé.

7. Dispositif selon l'une des revendications 1 à 6, **caractérisé en ce que** dans la zone de la face frontale ouverte (8) de la grille de tamis (6), la trémie d'alimentation (19) comporte une paroi de trémie élevée (20).

8. Dispositif selon l'une des revendications 1 à 7, **caractérisé en ce qu'**un tissu à mailles carrées (35) avec une ouverture de crible (36) située dans la gamme de 0,2 à 1,2 mm est prévu comme tissu à maille (7).

9. Dispositif selon l'une des revendications 1 à 8, **caractérisé en ce que** la trémie d'alimentation (19) ajourée sur le côté du fond est pourvue de trous d'un diamètre de 2 mm environ.

10. Dispositif selon l'une des revendications 1 à 9, **caractérisé en ce que** trois tôles de guidage (15) sont prévues, réparties au-dessus de la surface de séparation (14).
